# EUROPÄISCHE PATENTANMELDUNG

(11) **EP 1 676 663 A2**
(43) Veröffentlichungstag der Anmeldung: **05.07.2006**
(21) Anmeldenummer: 06007143.8
(22) Anmeldetag: 01.06.2004
(51) Int. Cl.: B23K 9/09, B23K 9/173, B23K 35/38

(54) **Schutzgase und Verfahren zum Metall-Schutzgas-Fügen mit wechselnder Polarität**

(30) Priorität: 26.06.2003 DE 10328968
(62) Teilanmeldung aus: 04012909.0
(71) Anmelder: Linde Aktiengesellschaft, 65189 Wiesbaden (DE)
(72) Erfinder: Miklos, Ernst, 82327 Tutzing (DE)
(74) Vertreter: Kasseckert, Rainer

(57) **Zusammenfassung**

Die Erfindung betrifft ein Verfahren zum Metall-Schutzgas-Fügen mit wechselnder Polarität und abschmelzender Elektrode (MSG-AC). Zum Verbessern der Prozessstabilität und der Arbeitsgeschwindigkeit wird ein Schutzgas verwendet, welches Argon und Dotierungen enthält.

## Beschreibung

Die Erfindung betrifft ein Verfahren zum Metall-Schutzgas-Fügen mit wechselnder Polarität und abschmelzender Elektrode (MSG-AC).

Das Metall-Schutzgas-Fügen umfasst das Verbinden von Metallen durch Schweißen, Löten oder Kombinationen dieser Verfahren unter Schutzgas. Das Metall-SchutzgasSchweißen (MSG-Schweißen) ist seit Jahren das überwiegend eingesetzte Verfahren zum Fügen metallischer Werkstoffe und in der ISO 857 definiert und beschrieben. Im Wesentlichen wird in einem Lichtbogen, der zwischen einer abschmelzenden Elektrode und einem oder mehreren Werkstücken brennt, Zusatzwerkstoff eingebracht. Dabei entsteht eine Verbindung mit dem Grundwerkstoff, der ebenfalls aufgeschmolzen wird. Je nach eingesetztem Schutzgas wird unterschieden zwischen MIG-Schweißen (mit inertem Gas) oder MAG-Schweißen (mit aktivem Gas). Die Schutzgasauswahl richtet sich nach den zu schweißenden Werkstoffen.

Als Variante des MSG-Prozesses wird seit einigen Jahren auch das MSG (MIG und MAG)-Löten praktiziert. Hier wird eine Drahtelektrode mit niedrigem Schmelzpunkt verwendet. Das Ziel ist eine Lötverbindung mit möglichst keiner oder nur geringer Aufschmelzung des Grundwerkstoffes. Neueste Entwicklungen versuchen auch eine Kombination beider Prozesse, z.B. Verbinden von Aluminiumwerkstoffen mit beschichteten Stahlblechen, wobei zur einen Werkstoffseite hin ein Lötprozess vorherrscht, und zur anderen ein Schweißprozess. All diese Prozesse werden mit Gleichstrom ―auch gepulstem Gleichstrom, kurz DC - durchgeführt. Ein Beispiel dafür ist in der EP 1 129 808 A1 beschrieben. Bei den meisten Anwendungen ist die abschmelzende Elektrode plus-gepolt und der Grundwerkstoff minus gepolt. Diese Art der Polung gewährleist ein ausreichendes Einschnüren der flüssig-teigigen Metallschmelze der Elektrode über die sogenannte "Pinch-Kraft". Bei Prozessen mit Impulsstrom (MSGp) ist dies Bedingung für einen regelmäßigen und reproduzierbaren Werkstoffübergang. Auf der Grundwerkstoffseite bewirkt die Minuspolung eine Elektronenemission, die entweder flächenmäßig oder über wandernde Punkte zur Erhitzung und zum Aufschmelzen des Metalls beiträgt. In wenigen Ausnahmefällen wird auch mit minusgepolter abschmelzender Elektrode gearbeitet. Es handelt sich hierbei um spezielle Anwendungen wie das Auftragsschweißen oder das Schweißen mit bestimmten Fülldrähten.

Seit einigen Jahren wird auch versucht, den Zusatzwerkstoff mit wechselnder Polarität abschmelzen zu lassen, siehe EP 1 103 329 A2 oder IIW-Dokument-No. XII-1720-02 vom Mai 2002.

Als Vorteile dieses Prozesses werden erwähnt: Besseres Vorwärmen der Drahtelektrode während der Minus-gepolten Phase und dadurch höhere Abschmelzleistung, bessere Spaltüberbrückbarkeit bei dünnen Bauteilen und MSG-Schweißbarkeit von so dünnen Blechen, wie es bisher nicht möglich war. Aufgrund dieser Vorteile findet der neue Prozess besonders in der Automobilindustrie viel Beachtung. Zur Zeit sind bereits zwei verschieden Gerätetypen am Markt erhältlich, mit weiteren Anbietern wird demnächst gerechnet. In Forschungsgremien und Instituten wird dem MSG-AC-Prozess ein weitreichendes Potential zugesagt. Bei folgenden Prozess/Werkstoffkombinationen wird besonders optimistisch weiterentwickelt:
- AC-MIG-Schweißen von Aluminiumlegierungen
- AC-MSG-Löten von beschichteten und unbeschichteten Stahl
- AC-MAG-Schweißen von dünnen Stahlblechen
- AC-MSG-Fügen ("Löt-Schweißen") von Aluminium mit beschichtetem und unbeschichtetem Stahlblech
- AC-MSG-Schweißen von hitzeempfindlichen Werkstoffen
- AC-MSG-Auftragsschweißen

Man erwartet durch den Einsatz der AC Technik eine deutliche Verbesserung der Abschmelzleistung ohne Vergrößerung des Wärmeeintrages in den Grundwerkstoff, eine bessere Spaltüberbrückbarkeit und die Möglichkeit des Einsatzes von förderstabileren Drahtelektroden mit größerem Durchmesser.

Wie in den bisherigen Veröffentlichungen nachzulesen ist, wurden bisher bei den Anwendungen der AC-Technik nur die vom typischen DC-Prozess bekannten Gase eingesetzt. Eine Untersuchung des Einflusses der Schutzgase beim AC-MSG-Schweißen und Löten ist nicht bekannt.

Es ist bekannt, dass ein relativ kalter Lichtbogen, also eine geringe Wärmeeinbringung in den Grundwerkstoff, auch Nachteile mit sich bringt. Das Benetzungsverhalten ist schlecht und es kommt zu Überwölbungen der Naht. Die sehr schmale Naht kann sich wiederum negativ auf die Spaltüberbrückbarkeit auswirken. Eine überwölbte Naht bedeutet bei dynamisch belasteten Teilen auch eine geometrische Kerbe mit entsprechend negativen Auswirkungen auf die Lebensdauer des Bauteiles. Bei Werkstoffen, die zu Porenbildung neigen, wie z.B. Aluminium-Legierungen, nimmt die Porenhäufigkeit zu, weil die Gase in der schnell abkühlenden Schmelze eingefroren werden. Wird keine ausreichende Benetzung/Aufschmelzung an der Oberfläche der Bauteile erreicht, kommt es zu Ausschussteilen, bedingt durch Bindefehler (Wurzel-, Flanken-, Zwischenlagen). Mit der Zielsetzung der Produktivitätssteigerung in der heutigen modernen Fertigung werden die Fügegeschwindigkeiten ständig erhöht, eine Steigerung der Schweiß- oder Lötgeschwindigkeit führt aber zwangsläufig zu einer Verstärkung der genannten Nachteile. Der Hauptvorteil des AC-Prozesses, die geringe Wärmeeinbringung in den Grundwerkstoff, ist besonders bei vollmechanischen Roboter-Fügetechniken ein Nachteil im Hinblick auf mögliche Geschwindigkeiten.

Aufgabe der Erfindung ist es, einen MSG-AC-Prozess dahingehend zu verbessern, dass die Prozessstabilität, die Nahtqualität und die Arbeitsgeschwindigkeit erhöht werden.

Diese Aufgabe wird erfindungsgemäß gelöst von einem Verfahren mit den Merkmalen des Anspruchs 1. Ausgestaltungen der Erfindung sind Gegenstände von Unteransprüchen.

Über die gezielte Beimischung von aktiven Gasen können die lichtbogenphysikalischen Vorgänge so beeinflusst werden, dass das Schweißen und/oder das Löten von metallischen Werkstoffen mit dem AC-MSG Prozess im Hinblick auf Prozessstabilität, Nahtqualität und mögliche Geschwindigkeiten wesentlich verbessert werden kann.

Erfindungsgemäß enthält das Schutzgas kein Helium, aber Argon und eines oder mehrere der Gase O₂, CO₂, N₂, NO oder N₂O als zusätzliche Komponenten oder als Dotierung, bevorzugt im Bereich von 0,001 bis 0,1 %.

In einer weiteren bevorzugten Ausführungsform können diese Dotiergase in der Konzentration von 0,1 bis 5 %, also hochdotiert, dem Schutzgas zugegeben sein.

Weitere Varianten der Erfindung schlagen eine mittlere Dotierung, bei der zwischen 0,01 bis 3 % der genannten Dotiergase verwendet werden, oder eine sehr hohe Dotierung (5-12 %) der genannten Komponenten im Schutzgas vor.

Für das MSG-AC-Löten von artgleichen oder verschiedenen, beschichteten und/oder unbeschichteten Werkstoffen sind die Gase der Ansprüche 3 und 4 vorteilhaft.

## Patentansprüche

1. Verfahren zum Metall-Schutzgas-Fügen von Stahl mit wechselnder Polarität und abschmelzender Elektrode (MSG-AC), **dadurch gekennzeichnet, dass** ein Schutzgas verwendet wird, welches kein Helium, aber Argon und mindestens eines der Gase O₂, CO₂, N₂, NO oder N₂O in einer Menge von 0,001 - 0,1 %, enthält.

2. Verfahren zum Metall-Schutzgas-Fügen von Aluminium, Aluminiumlegierungen, Titan, Titanlegierungen, Magnesiumlegierungen oder Nickelbasislegierungen mit wechselnder Polarität und abschmelzender Elektrode (MSA-AC), **dadurch gekennzeichnet, dass** ein Schutzgas verwendet wird, welches kein Helium, aber Argon und mindestens eines der Gase O₂, CO₂, N₂, NO oder N₂O in einer Menge von 0,001 - 0,1 %, enthält.

3. Schutzgas zum MSG-AC-Fügen, **gekennzeichnet durch** Argon und 0,001 bis 0,1 % O₂, CO₂, N₂, NO oder N₂O.

4. Schutzgas zum MSG-AC-Fügen, **gekennzeichnet durch** Argon und 0,1 bis 12 % CO₂.
